# EUROPEAN PATENT APPLICATION

(11) **EP 4 465 181 A1**
(43) Date of publication of application: **20.11.2024**
(21) Application number: 22919897.3
(22) Date of filing: 26.10.2022
(51) Int. Cl.: G06F 11/30, G21D 3/00, G21D 3/04

(54) **METHOD AND APPARATUS FOR TESTING FUNCTION OF NUCLEAR STEAM SUPPLY SYSTEM, AND COMPUTER DEVICE AND MEDIUM**

(30) Priority: 12.01.2022 CN 202210030483
(71) Applicant: China Nuclear Power Design Company Ltd. (Shenzhen), Shenzhen, Guangdong 518172 (CN); China Nuclear Power Engineering Co., Ltd., Shenzhen, Guangdong 518124 (CN); China General Nuclear Power Corporation, Shenzhen, Guangdong 518028 (CN); CGN Power Co., Ltd., Shenzen, Guangdong 518028 (CN)
(72) Inventor: WU, Yuejun, Shenzhen, Guangdong 518172 (CN); KONG, Kaihe, Shenzhen, Guangdong 518172 (CN); LIU, Zhiyun, Shenzhen, Guangdong 518172 (CN); WANG, Zhenying, Shenzhen, Guangdong 518172 (CN); MA, Tingwei, Shenzhen, Guangdong 518172 (CN); SUN, Chen, Shenzhen, Guangdong 518172 (CN); LIU, Haiqing, Shenzhen, Guangdong 518172 (CN); GONG, Mingyou, Shenzhen, Guangdong 518172 (CN)
(74) Representative: Greaves Brewster LLP
(86) International application number: PCT/CN2022/127735
(87) International publication number: WO 2023/134263

(57) **Abstract**

The present application relates a method and apparatus for testing the function of a nuclear steam supply system, and a device, a storage medium and a product. The method comprises: according to a first operation state of a system device in a nuclear steam supply system, determining first function state information corresponding to a target nuclear steam supply system function; acquiring a second operation state of a support system, which corresponds to the target nuclear steam supply system function, in the nuclear steam supply system, and determining second function state information of the target nuclear steam supply system function; determining a target system device in which a disaster occurs, determining, by means of probabilistic safety analysis, an associated system device affected by the disaster of the target system device, and according to the target system device and the associated system device, determining third function state information corresponding to the target nuclear steam supply system function; and according to the first function state information, the second function state information and the third function state information, determining a function state of the target nuclear steam supply system function. By means of the method, the detection efficiency and accuracy can be improved.

## Description

### CROSS-REFERENCE TO RELATED APPLICATION

The present application claims priority to Chinese Patent Application with No. 202210030483.4, entitled "Method and Apparatus for Testing Function of Nuclear Steam Supply System, and Computer Device and Medium", and filed on January 12, 2022, the content of which is expressly incorporated herein by reference in its entirety.

### TECHNICAL FIELD

The present application relates to the field of nuclear power plant function detection technology, particularly to a nuclear steam supply system function detection method and apparatus, a computer device, a storage medium and a computer program product.

### BACKGROUND

Due to the particularity of nuclear power plants, once a safety accident occurs, effective accident mitigation measures should be taken timely to reduce the impact of the safety accident on human body and the surrounding environment. Meanwhile, in order to minimize the losses caused by the safety accident, it should be necessary to promptly determine which functions in the nuclear steam supply system are available and which functions are unavailable, to carry out configuration operations such as commissioning, shutdown or isolation according to the function status of the nuclear steam supply system and regulate the operation of the nuclear steam supply system. In other words, in the event of a safety accident, operators are more concerned about the availability information of functions of the nuclear steam supply system than the availability information of system devices in the nuclear steam supply system, that is, it is determined whether the functions of the nuclear steam supply system are available.

In conventional technical solutions, operating personnel are generally required to verify the operating statuses of system devices in the nuclear steam supply system and the operating status of the support system, and perform a series of detection operations to determine whether other system devices associated with the target system device where the accident occurred are available, and then determine the availability information of the functions of the nuclear steam supply system. Obviously, in the conventional technical solution, when it is necessary to determine the function statuses of the functions of the nuclear steam supply system, not only is the operation process complicated and the detection efficiency low, but it also requires a lot of human resources. In addition, there may exist diagnosis errors caused by human factors during the manual detection process, resulting in inaccurate detection of the functions of the nuclear steam supply system.

Therefore, how to improve the convenience of the detection of the available statuses of the functions of the nuclear steam supply system, improve the detection efficiency, reduce the consumption of human resources, and improve the detection accuracy is a technical problem need to be solved by the those skilled in the art.

### SUMMARY

In view of this, as for the above technical problem, it is necessary to provide a nuclear steam supply system function detection method and apparatus, a computer device, a computer-readable storage medium, and a computer program product which can improve the convenience of the detection of the available status of the nuclear steam supply system function, improve the detection efficiency, reduce the consumption of human resources, and improve the detection accuracy.

In the first aspect of the present invention, a nuclear steam supply system function detection method is provided, which includes:
determining first function status information corresponding to a target nuclear steam supply system function according to a first operating status of a system device in the nuclear steam supply system;
acquiring a second operating status of a support system in the nuclear steam supply system corresponding to the target nuclear steam supply system function, and determining second function status information of the target nuclear steam supply system function;
determining a target system device where a disaster occurs, determining an associated system device affected by the disaster of the target system device through a probabilistic safety analysis, and determining third function status information corresponding to the target nuclear steam supply system function according to the target system device and the associated system device; and
determining a function status of the target nuclear steam supply system function according to the first function status information, the second function status information, and the third function status information.

In an embodiment, the determining the target system device where the disaster occurs, determining the associated system device affected by the disaster of the target system device through the probabilistic safety analysis, and determining the third function status information corresponding to the target nuclear steam supply system function according to the target system device and the associated system device includes:
determining the target system device where the disaster occurs according to disaster detection information of each system device, and determining a first availability status of the target system device;
determining a second availability status of the associated system device located in the same fire protection district as the target system device through the probabilistic safety analysis; and
determining the third function status information corresponding to the target nuclear steam supply system function according to the first availability status of the target system device and the second availability status of the associated system device.

In an embodiment, the determining the second availability status of the associated system device located in the same fire protection district as the target system device through the probabilistic safety analysis includes:
setting the first availability information for the associated system device in the same sub-district as the target system device, sub-districts being areas obtained by partitioning the fire protection district according to a preset mode;
arranging and combining the sub-districts, and calculating a safety probability corresponding to each arrangement and combination associated with the target system device according to an association relationship of system devices in each sub-district;
determining the second availability information of the associated system device in each sub-district according to the safety probability and a corresponding relationship between a system device and the sub-district; and
determining the second availability status of the associated system device in the same fire protection district as the target system device according to the first availability information and the second availability information.

In an embodiment, the acquiring the second operating status of the support system in the nuclear steam supply system corresponding to the target nuclear steam supply system function, and determining the second function status information of the target nuclear steam supply system function includes:
acquiring the second operating status of the support system corresponding to the target nuclear steam supply system function; and
determining the second function status information of the target nuclear steam supply system function according to the number, connection relationships and second operating statuses of support systems.

In an embodiment, when the support system is a cold source system, the acquiring the second operating status of the support system corresponding to the target nuclear steam supply system function includes:
acquiring a cooling pump bearing temperature, a cooling pump motor winding temperature, a cooling pump inlet pressure, a cooling pump outlet pressure, a cooling medium temperature, and a cooling medium flow rate corresponding to the target nuclear steam supply system function.

In an embodiment, the determining the second function status information of the target nuclear steam supply system function according to the number, connection relationships and second operating statuses of support systems includes:
when the number of the support systems is equal to one, and when the support system is determined to be faulty according to the second operating status, determining that the second function status information of the target nuclear steam supply system function indicates unavailability; otherwise, determining that the second function status information of the target nuclear steam supply system function indicates availability;
when there exists a plurality of support systems, and the plurality of support systems are redundantly connected to the nuclear steam supply system, and when the plurality of support systems are determined to be faulty according to the second operating status of each support system, determining that the second function status information of the target nuclear steam supply system function indicates the unavailability; otherwise, determining that the second function status information of the target nuclear steam supply system function indicates the availability.

In an embodiment, when the cooling pump bearing temperature is greater than a first temperature threshold, determining the support system to be faulty.

In an embodiment, when the cooling pump motor winding temperature is greater than a second temperature threshold, determining the support system to be faulty.

In an embodiment, when the cooling pump inlet pressure is less than a first pressure threshold, determining the support system to be faulty.

In an embodiment, when the cooling pump outlet pressure is less than a second pressure threshold, determining the support system to be faulty.

In an embodiment, when the cooling medium temperature is greater than a third temperature threshold, determining the support system to be faulty.

In an embodiment, when the cooling medium flow rate is less than a first flow rate threshold, determining the support system to be faulty.

In an embodiment, the system device includes a signal acquisition device and an execution device, the determining the first function status information corresponding to the target nuclear steam supply system function according to the first operating status of the system device in the nuclear steam supply system includes:
determining first operation information of the signal acquisition device according to whether a signal value collected by the signal acquisition device exceeds a normal range and whether there exists a wiring or disconnection fault in the signal acquisition device;
determining second operation information of the execution device according to whether there exists fault information of the execution device; and
determining the first function status information corresponding to the target nuclear steam supply system function according to the first operation information and the second operation information.

In an embodiment, the method further includes:
acquiring a current status functional parameter of the nuclear steam supply system, and determining a current degradation degree of a status function according to the current status functional parameter;
determining a current accident handling strategy corresponding to the current degradation degree according to a preset corresponding relationship between a degradation degree and an accident handling strategy, the current accident handling strategy including a current mitigation measure and a target safe shutdown status; and
determining a configuration parameter of the target nuclear steam supply system function by using the current accident handling strategy.

In an embodiment, the method further includes:
determining a regulation priority of the configuration parameter of the target nuclear steam supply system function according to the degradation degree.

In an embodiment, the determining the regulation priority of the configuration parameter of the target nuclear steam supply system function according to the degradation degree includes:
when there exists a target status function with a current degradation degree representing a serious degradation, setting the regulation priority of the configuration parameter corresponding to the target status function to the highest priority;
when there is no status function with a current degradation degree representing a serious degradation, determining a regulation priority of a configuration parameter corresponding to each status function according to a type of each status function.

In an embodiment, the determining the configuration parameter of the target nuclear steam supply system function by using the current accident handling strategy includes:
determining a target status functional parameter corresponding to the current status functional parameter of the nuclear steam supply system;
calculated an actual deviation value between the current status functional parameter and the target status functional parameter, the target status functional parameter having the same type as the current status functional parameter; and
determining the configuration parameter of the target nuclear steam supply system function according to the actual deviation value and a preset allowable deviation range.

In an embodiment, the method further includes:
displaying the configuration parameter, the function status and a third operating status corresponding to the target nuclear steam supply system function through a visual image.

In the second aspect of the present invention, a nuclear steam supply system function detection apparatus is provided, which includes:
a first determination module, configured to determine first function status information corresponding to a target nuclear steam supply system function according to a first operating status of a system device in the nuclear steam supply system;
a second determination module, configured to acquire a second operating status of a support system in the nuclear steam supply system corresponding to the target nuclear steam supply system function, and determine second function status information of the target nuclear steam supply system function;
a third determination module, configured to determine a target system device where a disaster occurs, determine an associated system device affected by the disaster of the target system device through a probabilistic safety analysis, and determine third function status information corresponding to the target nuclear steam supply system function according to the target system device and the associated system device;
a comprehensive determination module, configured to determine a function status of the target nuclear steam supply system function according to the first function status information, the second function status information, and the third function status information.

In the third aspect of the present invention, a computer device is provided, which includes a processor and a memory storing a computer program. The processor, when executing the computer program, implements the steps of:
determining first function status information corresponding to a target nuclear steam supply system function according to a first operating status of a system device in the nuclear steam supply system;
acquiring a second operating status of a support system in the nuclear steam supply system corresponding to the target nuclear steam supply system function, and determining second function status information of the target nuclear steam supply system function;
determining a target system device where a disaster occurs, determining an associated system device affected by the disaster of the target system device through a probabilistic safety analysis, and determining third function status information corresponding to the target nuclear steam supply system function according to the target system device and the associated system device; and
determining a function status of the target nuclear steam supply system function according to the first function status information, the second function status information, and the third function status information.

In the fourth aspect of the present invention, a computer-readable storage medium is provided, on which a computer program is stored. The computer program, when executed by a processor, causes the processor to implement the steps of:
determining first function status information corresponding to a target nuclear steam supply system function according to a first operating status of a system device in the nuclear steam supply system;
acquiring a second operating status of a support system in the nuclear steam supply system corresponding to the target nuclear steam supply system function, and determining second function status information of the target nuclear steam supply system function;
determining a target system device where a disaster occurs, determining an associated system device affected by the disaster of the target system device through a probabilistic safety analysis, and determining third function status information corresponding to the target nuclear steam supply system function according to the target system device and the associated system device; and
determining a function status of the target nuclear steam supply system function according to the first function status information, the second function status information, and the third function status information.

In the fifth aspect of the present invention, a computer program product is provided, which includes a computer program. The computer program, when executed by a processor, causes the processor to implement the steps of:
determining first function status information corresponding to a target nuclear steam supply system function according to a first operating status of a system device in the nuclear steam supply system;
acquiring a second operating status of a support system in the nuclear steam supply system corresponding to the target nuclear steam supply system function, and determining second function status information of the target nuclear steam supply system function;
determining a target system device where a disaster occurs, determining an associated system device affected by the disaster of the target system device through a probabilistic safety analysis, and determining third function status information corresponding to the target nuclear steam supply system function according to the target system device and the associated system device; and
determining a function status of the target nuclear steam supply system function according to the first function status information, the second function status information, and the third function status information.

With the above-mentioned nuclear steam supply system function detection method and apparatus, computer device, storage medium and computer program product, in the method, the first function status information and the second function status information of the target nuclear steam supply system function are determined according to the operating status of the system equipment and the operating status of the support system respectively, the target system device where the disaster occurs is determined before the associated system device affected by the disaster of the target system device is determined through probabilistic safety analysis, the third function status information corresponding to the target nuclear steam supply system function is determined according to the target system device and the associated system device, and the function status of the target nuclear steam supply system function is determined according to the first function status information, the second function status information and the third function status information. In the method, the process of manually executing the detection operation is replaced with the probabilistic safety analysis, in order to achieve the purpose of determining whether other system devices associated with the target system device where the disaster occurs are available. Therefore, the method can improve the convenience of detecting the available status of the nuclear steam supply system function and reduce the consumption of human resources. Further, since manual operation is avoided, the diagnosis errors caused by human factors during the manual detection process can be avoided, thereby improving the detection accuracy.

### BRIEF DESCRIPTION OF THE DRAWINGS

In order to more clearly illustrate the technical solution in the embodiments of the present invention, the accompanying drawings required for use in the embodiments will be briefly introduced below. Obviously, the drawings described below are merely some embodiments of the present invention. Those skilled in the art may obtain other drawings based on these drawings without any creative effort.
FIG. 1 is an application environment diagram of a nuclear steam supply system function detection method according to an embodiment.
FIG. 2 is a flow chart of a nuclear steam supply system function detection method according to an embodiment.
FIG. 3 is a determination logic diagram of a nuclear steam supply system function detection method according to an embodiment.
FIG. 4 is a flow chart of steps of determining a target system device where a disaster occurs, determining an associated system device affected by the disaster of the target system device through a probabilistic safety analysis, and determining third function status information corresponding to a target nuclear steam supply system function according to the target system device and the associated system device according to an embodiment.
FIG. 5 is a flow chart showing a method for determining a loss of a cold source according to an embodiment.
FIG. 6 is a flow chart showing a nuclear steam supply system function detection method according to another embodiment.
FIG. 7 is a flow chart of determining configuration parameters of a target nuclear steam supply system function according to another embodiment.
FIG. 8 is a schematic diagram of a function monitoring and display interface of a nuclear steam supply system according to an embodiment.
FIG. 9 is a partial enlarged view of the function monitoring and display interface of the nuclear steam supply system shown in FIG. 8.
FIG. 10 is a structure diagram illustrating a nuclear steam supply system function detection apparatus according to an embodiment.
FIG. 11 is an internal structure diagram of a computer device according to an embodiment.

### DETAILED DESCRIPTION

In order to make the purpose, the technical solution, and advantages of the present invention clearer to understand, the present invention is elaborated below in conjunction with the accompanying drawings and embodiments. It should be appreciated that the specific embodiments described herein are merely used for explaining the present invention, rather than limiting the present application.

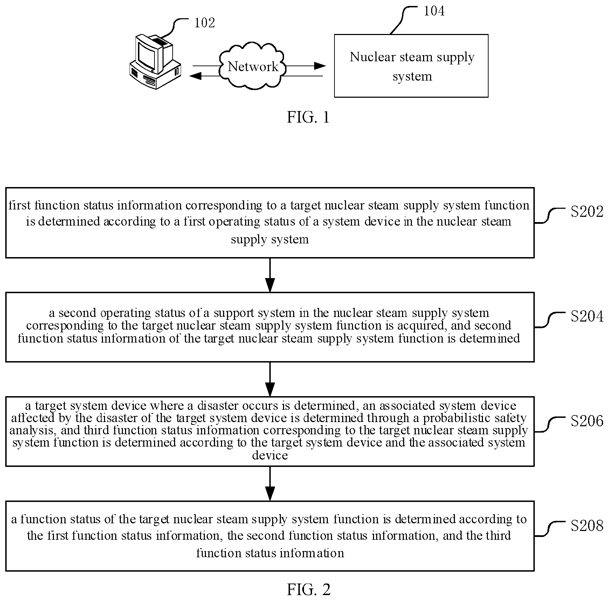

A nuclear steam supply system function detection method provided in embodiments of the present invention can be applied to the application environment as shown in FIG. 1. The application environment may include a terminal device 102 and a nuclear steam supply system 104. The nuclear steam supply system (NSSS) 104 refers to a system in a nuclear power plant that uses heat energy generated by a fission reaction of a nuclear fuel in a nuclear reactor to generate steam. The nuclear steam supply system mainly includes a nuclear reactor, a steam generator, a main coolant system and an auxiliary system. The nuclear steam supply system is generally used for power generation, driving and heat supply. The terminal device 102 is in communication with the nuclear steam supply system 104, and is configured to: determine first function status information corresponding to a target nuclear steam supply system function according to a first operating status of a system device in the nuclear steam supply system; acquire a second operating status of a support system in the nuclear steam supply system corresponding to the target nuclear steam supply system function, and determine second function status information of the target nuclear steam supply system function; determine a target system device where a disaster occurs, determine an associated system device affected by the disaster of the target system device through a probabilistic safety analysis, and determine third function status information corresponding to the target nuclear steam supply system function according to the target system device and the associated system device; and determine a function status of the target nuclear steam supply system function according to the first function status information, the second function status information, and the third function status information. The terminal device 102 may be, but is not limited to, various personal computers, laptop computers, smart phones, tablet computers, etc.

In an embodiment, as shown in FIG. 2, a nuclear steam supply system function detection method is provided, which is applied to the terminal device in FIG. 1 as an example for illustration. The method may include the following steps.

Step 202: first function status information corresponding to a target nuclear steam supply system function is determined according to a first operating status of a system device in the nuclear steam supply system.

The system device refers to a device in the nuclear steam supply system of the nuclear power plant configured to implement the target nuclear steam supply system function. The system device may include a signal acquisition device and an execution device. The signal acquisition device is configured to monitor operating parameters of the nuclear steam supply system. The execution device is configured to execute an operation to implement a corresponding function. It should be appreciated that, for different operating statuses of the system device corresponding to the target nuclear steam supply system function, the first function status information corresponding to the target nuclear steam supply system function is different. The first function status information may specifically be information indicating that the target nuclear steam supply system function is available or information indicating that the target nuclear steam supply system function is unavailable.

Step 204: a second operating status of a support system in the nuclear steam supply system corresponding to the target nuclear steam supply system function is acquired, and second function status information of the target nuclear steam supply system function is determined.

Specifically, the support system refers to a general term for auxiliary systems that provide power supply, cold source or gas source for the nuclear steam supply system of the nuclear power plant. In actual operations, the required support systems may be different for different nuclear steam supply system functions, so it is necessary to determine the support system corresponding to the target nuclear steam supply system function, and determine the second function status information of the target nuclear steam supply system function according to the second operating status of the support system corresponding to the target nuclear steam supply system function. It should be appreciated that, for different operating statuses of the support system corresponding to the target nuclear steam supply system function, the second function status information corresponding to the target nuclear steam supply system function is different. The second function status information may specifically include information indicating that the target nuclear steam supply system function is available and information indicating that the target nuclear steam supply system function is unavailable.

Step 206: a target system device where a disaster occurs is determined, an associated system device affected by the disaster of the target system device is determined through a probabilistic safety analysis, and third function status information corresponding to the target nuclear steam supply system function is determined according to the target system device and the associated system device.

Specifically, a disaster generally refers to a situation where a fire breaks out in a system device, or other abnormal conditions occur on the system device, which may not only affect the normal operation of a target system device where the abnormal condition occurs, but also affect the normal operation of an associated system device of the target system device. After the target system device where the disaster occurs is determined, the associated system device affected by the disaster of the target system device is determined through the probabilistic safety analysis. The third function status information of the target nuclear steam supply system function is determined according to a corresponding relationship among the target system device, the associated system device, and the target nuclear steam supply system function. The third function status information may specifically include information indicating that the target nuclear steam supply system function is available and information indicating that the target nuclear steam supply system function is unavailable.

Step 208: a function status of the target nuclear steam supply system function is determined according to the first function status information, the second function status information, and the third function status information.

Specifically, after the first function status information, the second function status information, and the third function status information corresponding to the target nuclear steam supply system function are determined, the function status of the target nuclear steam supply system function is determined by performing a logical determination on the first function status information, the second function status information, and the third function status information. When the function status of the target nuclear steam supply system function is available, it indicates that the target nuclear steam supply system function is currently in an available status. When the function status of the target nuclear steam supply system function is unavailable, it indicates that the target nuclear steam supply system function is currently in an unavailable status.

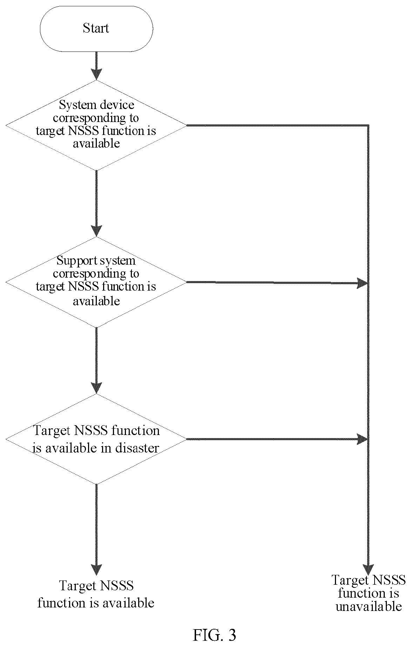

FIG. 3 provides a schematic diagram of the determination of a nuclear steam supply system function detection method. As shown in FIG. 3, when it is determined that the first function status information, the second function status information and the third function status information corresponding to the target nuclear steam supply system function all indicate availability, the function status of the target nuclear steam supply system function is determined to be the available status. That is, the function status of the target nuclear steam supply system function is determined to be the available status only when it is determined that the system device and the support system corresponding to the target nuclear steam supply system function are available, and the target nuclear steam supply system function is available in the case of a disaster.

In addition, the operating personnel may further determine whether the target nuclear steam supply system function is in a temporarily unavailable status or a permanently unavailable status according to the determined first function status information, second function status information and third function status information. The temporarily unavailable status refers to that the target nuclear steam supply system function is currently in an unavailable status, but can be restored to an available status through a recovery action. The permanently unavailable status refers to that the target nuclear steam supply system function is currently in the unavailable status, and the target nuclear steam supply system function cannot be restored or is no longer considered for subsequent mitigation measures. It should be noted that, in actual operations, after determining the function status of the target nuclear steam supply system function, the operating personnel can perform configuration operations, such as commissioning, shutdown or isolation of the target nuclear steam supply system function, according to the determined information.

In the nuclear steam supply system function detection method provided in the embodiment, the first function status information and the second function status information of the target nuclear steam supply system function are determined according to the operating status of the system device and the operating status of the support system respectively. After the target system device where the disaster occurs is determined, the associated system device affected by the disaster of the target system device is determined through the probabilistic safety analysis, and the third function status information corresponding to the target nuclear steam supply system function is determined according to the target system device and the associated system device. The function status of the target nuclear steam supply system function is determined according to the first function status information, the second function status information and the third function status information. In the method, the process of manually executing the detection operation is replaced with the probabilistic safety analysis, in order to achieve the purpose of determining whether other system devices associated with the target system device where the disaster occurs are available. Therefore, the method can improve the convenience of detecting the available status of the nuclear steam supply system function and reduce the consumption of human resources. Further, since manual operation is avoided, the diagnosis errors caused by human factors during the manual detection process can be avoided, thereby improving the detection accuracy.

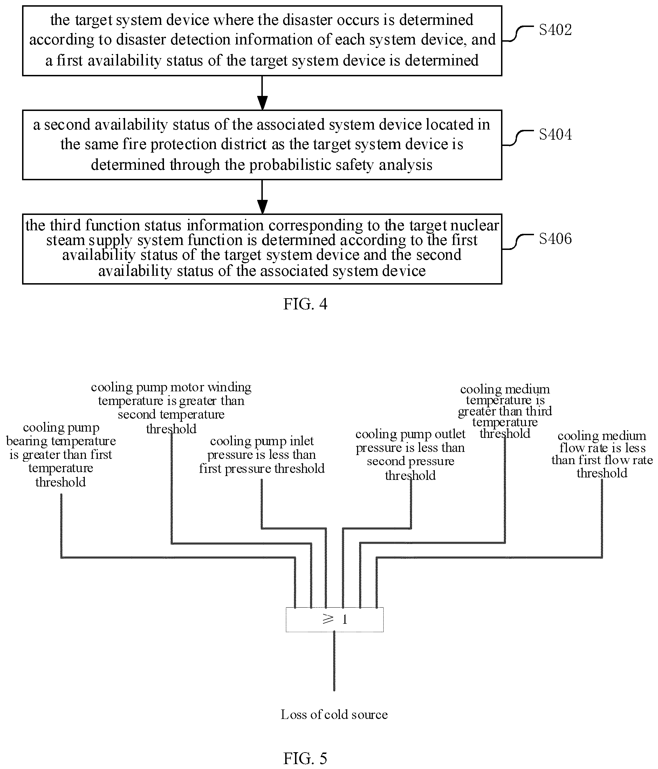

On the basis of the above-mentioned embodiment, an embodiment below further illustrates and optimizes the technical solution. Specifically, in the embodiment, as shown in FIG. 4, the step that the target system device where the disaster occurs is determined, the associated system device affected by the disaster of the target system device is determined through the probabilistic safety analysis, and the third function status information corresponding to the target nuclear steam supply system function is determined according to the target system device and the associated system device, may include the following steps.

Step 402: the target system device where the disaster occurs is determined according to disaster detection information of each system device, and a first availability status of the target system device is determined.

Specifically, the disaster detection information of each system device is acquired by a preset disaster detection device, and the target system device where the disaster occurs is determined according to the disaster detection information of each system device. For example, in the case of a fire disaster in the nuclear power plant, the fire can be detected through a fire detection system of the nuclear power plant to determine a target system device where the fire occurs. For the target system device where the fire occurs, status information thereof is determined to indicate unavailability, that is, the first availability status of the target system device is determined.

Step 404: a second availability status of the associated system device located in the same fire protection district as the target system device is determined through probabilistic safety analysis.

The fire protection district is obtained by dividing the nuclear steam supply system based on actuators, pipelines, cables, cabinets, etc. When it is determined that a fire occurs, system devices in the fire protection district can be divided into two categories: a target system device where the fire occurs, and other system devices in the same fire protection district as the target system device but does not catch fire. Therefore, after the first availability status of the target system device is determined, it is also necessary to determine the second availability status of the associated system device of the target system device in other system devices.

In an embodiment, the step that the second availability status of the associated system device in the same fire protection district as the target system device is determined through the probabilistic safety analysis may include:
first availability information is set for an associated system device in the same sub-district as the target system device, in which sub-districts are areas obtained by partitioning a fire protection district according to a preset mode;
the sub-districts are arranged and combined, and a safety probability corresponding to each arrangement and combination associated with the target system device is calculated according to an association relationship of system devices in each sub-district;
second availability information of an associated system device in each sub-district is determined according to the safety probability and a corresponding relationship between a system device and a sub-district;
a second availability status of the associated system device in the same fire protection district as the target system device is determined according to the first availability information and the second availability information.

Specifically, for the fire protection district, the fire protection district is partitioned into a plurality of sub-districts according to a preset condition. For example, the fire protection district may be partitioned according to an arrangement of electrical panels or cables to obtain a plurality of areas, thereby determining a plurality of sub-districts. If a fire occurs in the target system device, other system devices in the same sub-district as the target system device are set to the unavailable status, that is, the first availability information of associated system devices in the same sub-district as the target system device is determined to indicate unavailability. The second availability information of each system device in other sub-districts is determined as follows. Firstly, a plurality of sub-districts corresponding to the fire protection district are arranged and combined, each different arrangement and combination represents existing of related system devices. The arrangement and combination associated with the target system device are determined, a core damage probability and a large-scale radioactive release frequency are calculated respectively corresponding to each determined arrangement and combination, that is, a safety probability corresponding to each arrangement and combination is determined. The safety probability represents a safety assessment value of a system device associated with a target system device in the case that a fire occurs on the target system device. After the safety probability corresponding to each arrangement and combination is determined, the second availability information of each associated system device in each sub-district is determined according to the safety probability and the corresponding relationship between the system device and the sub-district. For example, assuming that the fire protection district A includes four sub-districts A1 to A4, if the target system device is located in the sub-district A1, the first availability status of the associated system devices in sub-district A1 is determined to be the unavailable status. Then the safety probability corresponding to each arrangement and combination associated with sub-district A1 is determined, and impact, caused by the disaster occurring on the target system device, on a sub-district corresponding to each arrangement and combination is determined according to the safety probability, and an arrangement and combination "A1+A2" corresponding to the most impact by the disaster occurring on the target system device is determined, that is, the sub-district A2 affected by the target system device in each arrangement and combination is determined, and then the system device in sub-district A2 is determined to be in an unavailable status according to the corresponding relationship between the sub-district and the system device.

Step 406: the third function status information corresponding to the target nuclear steam supply system function is determined according to the first availability status of the target system device and the second availability status of the associated system device.

Specifically, after the first availability status of the target system device and the second availability status of the associated system device are determined, the third function status information of the target nuclear steam supply system function is determined according to the corresponding relationship between each system device and the target nuclear steam supply system function. It should be appreciated that if the system devices corresponding to the target nuclear steam supply system function include the target system device, and the target system device is unavailable, the third function status information of the target nuclear steam supply system function is determined to the unavailable status. If the system devices corresponding to the target nuclear steam supply system function include the associated system device X, and the associated system device X is unavailable, the third function status information of the target nuclear steam supply system function is determined to indicate unavailability.

That is to say, in the embodiment, the target system device where the fire occurs is monitored by the fire detection device reasonably provided in the corresponding fire protection district, and other system devices in the same fire protection district which do not catch fire are managed by a probabilistic safety analysis method. Firstly, the fire protection district is partitioned into a number of small districts according to an arrangement of electrical panels or cables. After the fire protection district is partitioned into a number of small districts, if a system device in a small district catches fire, it is considered that all system devices in the small district is invalid. For other small districts M, it is determined whether the system devices in other small districts M may cause unacceptable consequences according to the safety probability corresponding to each arrangement and combination of the small districts M and the small district catching fire, and it is determined whether the corresponding arrangement and combination belongs to an unavailable small district combination. If the corresponding arrangement and combination belongs to the unavailable small district combination, it is determined that the system devices in the small districts M are unavailable, otherwise, it is determined that the system devices in the small districts M are available.

Accordingly, according to the method in the embodiment, the convenience and accuracy of determination of the third function status information of the target nuclear steam supply system function can be improved.

Based on the above embodiment, an embodiment below further illustrates and optimizes the technical solution. Specifically, in the embodiment, the step that the second operating status of the support system in the nuclear steam supply system corresponding to the target nuclear steam supply system function is acquired and the second function status information of the target nuclear steam supply system function is determined may include:
the second operating status of the support system corresponding to the target nuclear steam supply system function is acquired;
the second function status information of the target nuclear steam supply system function is determined according to the number, connection relationships and the second operating statuses of support systems.

Specifically, a support system corresponding to the target nuclear steam supply system function is determined, and a second operating status of the determined support system is acquired. The second operating status refers to an operating condition of the support system, such as whether a failure occurs and whether a support performance is degraded. For example, for a cold source system, the second operating status may include a mechanical failure condition of the cold source system, and a performance status of the cooling capacity.

It should be noted that, in actual operations, in order to ensure the stable and reliable operation of the nuclear steam supply system function, a plurality of identical support systems can be set up to work together to provide system support for the nuclear steam supply system. Therefore, on the basis of acquiring the second operating status of the support system, it is necessary to further acquire the number and connection relationships of the support systems, and determine the second function status information of the target nuclear steam supply system function according to the number, connection relationships and the second operating statuses of the support systems.

In an embodiment, the step of determining the second function status information of the target nuclear steam supply system function according to the number, the connection relationships and the second operating statuses of the support systems may include:

when the number of the support systems is equal to one, and when it is determined according to the second operating status that the support system is faulty, the second function status information of the target nuclear steam supply system function is determined to indicate unavailability, otherwise, the second function status information of the target nuclear steam supply system function is determined to indicate availability.

It should be noted that if the number of the support systems is equal to one, the support system is connected to the nuclear steam supply system to provide system support for the nuclear steam supply system. When it is determined according to the second operating status that the support system is faulty, it means that the support system is faulty and cannot provide system support for the nuclear steam supply system, and thus the second function status information of the target nuclear steam supply system function is determined to indicate unavailability. When it is determined according to the second operating status that there is no failure in the support system, the second function status information of the target nuclear steam supply system function is determined to indicate availability.

In an embodiment, the step that the second function status information of the target nuclear steam supply system function is determined according to the number, the connection relationships and the second operating statuses of the support systems may include:
when there exists a plurality of support systems, and the plurality of support systems are redundantly connected to the nuclear steam supply system, and when the plurality of support systems are determined to be faulty according to the second operating status of each support system, the second function status information of the target nuclear steam supply system function is determined to indicate unavailability; otherwise, the second function status information of the target nuclear steam supply system function is determined to indicate availability.

It should be noted that if there exist a plurality of support systems, the plurality of support systems are redundantly connected to the nuclear steam supply system to provide system support to the nuclear steam supply system. If some of the plurality of support systems fail, other redundant support systems can still be adopted to continue to provide system support to the nuclear steam supply system. Only when the plurality of support systems all fail, it means that the support systems cannot provide system support to the nuclear steam supply system, and therefore the second function status information of the target nuclear steam supply system function is determined to indicate unavailability. In other words, if any one of the plurality of redundant support systems does not fail, the second function status information of the target nuclear steam supply system function is determined to indicate availability.

In a specific implementation, for cold source systems of the nuclear power plant, the cold source systems are generally arranged in columns, and users corresponding to each column of cold source systems are clear, so the consequences of losing one column or all columns of cold source systems are also clear. For example, the high-pressure discharge function of a chemical and volumetric control system consists of two identical sub-columns of systems, and each sub-column of systems is provided with a high-pressure discharge cooler, which is cooled by cold source systems in different columns. Accordingly, when one column of cold source systems is lost, it may only affect the availability of the high-pressure discharge cooler corresponding to the one sub-column. Since there is a redundant high-pressure discharge cooler corresponding to the other sub-column which is available, the high-pressure discharge function is still available. But if the cold sources corresponding to both high-pressure discharge coolers in both sub-columns are lost, the high-pressure discharge function is unavailable.

In view of this, according to the method in the embodiment, the second function status information of the target nuclear steam supply system function can be accurately determined.

Based on the above embodiment, an embodiment below further illustrates and optimizes the technical solution. Specifically, in the embodiment, the step that the second operating status of the support system corresponding to the target nuclear steam supply system function is acquired when the support system is the cold source system may include:
a cooling pump bearing temperature, a cooling pump motor winding temperature, a cooling pump inlet pressure, a cooling pump outlet pressure, a cooling medium temperature, and a cooling medium flow rate corresponding to the target nuclear steam supply system function are acquired.

The embodiment is mainly explained with respect to the case where the support system is a cold source system. In actual operations, the loss of cold source may cause the system devices in the nuclear steam supply system to lose cooling and be unable to operate for a long time, and may also cause a system device performing a heat removal function to lose a heat removal capacity thereof. In actual operations, by detecting the second operating status of the support system, when the second operating status indicating the loss of the cold source is not detected, it is determined that the corresponding target nuclear steam supply system function is available. When the second operating status indicating the loss of the cold source is detected, it is determined that the corresponding target nuclear steam supply system function is unavailable. There are two types of information indicating the loss of cold source: one is a mechanical failure in a cold source system, and the other is a decrease in a cooling capacity. By detecting the second operating status such as the cooling pump bearing temperature, the cooling pump motor winding temperature, the cooling pump inlet pressure, the cooling pump outlet pressure, etc., it is determined whether there is a mechanical failure in the cold source system. By detecting the second operating status such as the cooling medium temperature and the cooling medium flow rate, it is determined whether there is a decrease in the cooling capacity of the cold source system.

In an embodiment, the step that it is determined that the support system is faulty may include:
when the cooling pump bearing temperature is greater than a first temperature threshold, it is determined that the support system is faulty.

Specifically, by presetting the first temperature threshold, after the cooling pump bearing temperature is acquired, it is determined whether the acquired cooling pump bearing temperature is greater than the first temperature threshold. If the acquired cooling pump bearing temperature is greater than the first temperature threshold, it is determined that the support system is faulty, otherwise, it is determined that the support system is not faulty.

In an embodiment, the step that it is determined that the support system is faulty may include:
when the cooling pump motor winding temperature is greater than a second temperature threshold, it is determined that the support system is faulty.

Specifically, by presetting the second temperature threshold, after the cooling pump motor winding temperature is acquired, it is determined whether the acquired cooling pump motor winding temperature is greater than the second temperature threshold. If the acquired cooling pump motor winding temperature is greater than the second temperature threshold, it is determined that the support system is faulty, otherwise, it is determined that the support system is not faulty.

In an embodiment, that step that it is determined that the support system is faulty may include:
when the cooling pump inlet pressure is less than a first pressure threshold, it is determined that the support system is faulty.

Specifically, by presetting the second pressure threshold, after the cooling pump inlet pressure is acquired, it is determined whether the acquired cooling pump inlet pressure is greater than the second pressure threshold. If the acquired cooling pump inlet pressure is less than the first pressure threshold, it is determined that the support system is faulty, otherwise, it is determined that the support system is not faulty.

In an embodiment, the step that it is determined that the support system is faulty may include:
when the cooling pump outlet pressure is less than a second pressure threshold, it is determined that the support system is faulty.

Specifically, by presetting the second pressure threshold, after the cooling pump inlet pressure is acquired, it is determined whether the acquired cooling pump inlet pressure is less than the second pressure threshold. If the acquired cooling pump outlet pressure is less than the second pressure threshold, it is determined that the support system is faulty, otherwise, it is determined that the support system is not faulty.

In an embodiment, the step that it is determined that support system is faulty may include:
when the cooling medium temperature is greater than a third temperature threshold, it is determined that the support system is faulty.

Specifically, by presetting the third temperature threshold, after the cooling medium temperature is acquired, it is determined whether the acquired cooling medium temperature is greater than the third temperature threshold. If the acquired cooling medium temperature is greater than the third temperature threshold, it is determined that the support system is faulty; otherwise, it is determined that the support system is not faulty.

In an embodiment, the step that it is determined that the support system is faulty may include:
when the cooling medium flow rate is less than a first flow rate threshold, it is determined that the support system is faulty.

Specifically, by presetting the first flow rate threshold, after the cooling medium flow rate is acquired, it is determined whether the acquired cooling medium flow rate is greater than the first flow rate threshold. If the acquired cooling medium flow rate is greater than the first flow rate threshold, it is determined that the support system is faulty, otherwise, it is determined that the support system is not faulty.

FIG. 5 is a schematic diagram showing a method for determining loss of a cold source provided in an embodiment. As shown in FIG. 5, if a mechanical failure of the cold source system or a decrease in the cooling capacity of the cold source system is detected, it is determined that the cold source system loses the cold source. The mechanical failure may include any one of the following conditions: the cooling pump bearing temperature is greater than the first temperature threshold, the cooling pump motor winding temperature is greater than the second temperature threshold, the cooling pump inlet pressure is less than the first pressure threshold, or the cooling pump outlet pressure is less than the second pressure threshold. The decrease in the cooling capacity may include any one of the following conditions: the cooling medium temperature is greater than the third temperature threshold, or the cooling medium flow rate is less than the first flow rate threshold.

In view of this, according to the method in the embodiment, it is possible to accurately and comprehensively detect whether the cold source system is faulty, thereby improving the accuracy and comprehensiveness of the determined second operating status.

Based on the above embodiment, an embodiment below further illustrates and optimizes the technical solution. Specifically, in the embodiment, the system devices may include a signal acquisition device and an execution device. The step that the first function status information corresponding to the target nuclear steam supply system function is determined according to the first operating status of the system device in the nuclear steam supply system may include:
first operation information of the signal acquisition device is determined according to whether a signal value collected by the signal acquisition device exceeds a normal range and whether there exists a wiring or disconnection fault in the signal acquisition device;
second operation information of the execution device is determined according to whether there exists fault information of the execution device;
first function status information corresponding to the target nuclear steam supply system function is determined according to the first operation information and the second operation information.

Specifically, in the embodiment, the system devices may include the signal acquisition device and the execution device. The signal acquisition device is configured to monitor operating parameters of the nuclear steam supply system, and the execution device is configured to execute an operation to implement a corresponding function.

For the signal acquisition device, by acquiring the signal value collected by the signal acquisition device and comparing the collected signal value to the normal range, when the collected signal value exceeds the normal range, it is determined that an output of the signal acquisition device is invalid, that is, the signal acquisition device is in an unavailable status, i.e., the first operation information of the signal acquisition device is determined to indicate unavailability. Alternatively, by detecting whether the signal acquisition device has a wiring or disconnection fault, when it is detected that the signal acquisition device has the wiring or disconnection fault, the signal acquisition device is determined to be in an unavailable status, that is, the first operation information of the signal acquisition device is determined to indicate unavailability.

In a specific implementation mode, a quality determination device is preset, the information such as the signal value collected by the signal acquisition device, whether there is the wiring or disconnection fault, etc., is input into the quality determination device to perform a logical determination and output a corresponding determination value. When the determination value is equal to 1, it indicates that the signal acquisition device is unavailable. When the determination value is equal to 0, it indicates that the signal acquisition device is available.

For the execution device, an operation log generated by the execution device during an operational process is monitored, and whether there is fault information of the execution device is determined according to the operation log. If no fault information of the execution device is detected, it means that the execution device is available, that is, the second operation information of the execution device is determined to indicate availability. If fault information of the execution device is detected, it means that the execution device is unavailable, that is, the second operation information of the execution device is determined to indicate unavailability.

For example, if a motor-type execution device has fault information, such as a shutdown signal of a protection system, a switchboard failure or a power supply loss, etc., it means that the corresponding motor-type execution device is unavailable. Otherwise, the corresponding motor-type execution device is considered to be available. If an electric switch valve-type execution device has fault information, such as a switchboard failure or a power supply loss, etc., it means that the corresponding electric switch valve-type execution device is unavailable. Otherwise, the corresponding electric switch valve-type execution device is considered to be available. If an electric control valve-type execution device has fault information, such as a switchboard failure, a power supply loss, a control power supply loss, or on and off instructions exist at the same time, etc., it means that the corresponding electric control valve-type execution device is unavailable. Otherwise, the corresponding electric control valve-type execution device is considered to be available.

Specifically, after the first operation information of the signal acquisition device and the second operation information of the execution device are acquired, the first function status information corresponding to the target nuclear steam supply system is determined according to the first operation information and the second operation information. Specifically, only when the first operation information and the second operation information both indicate availability, the first function status information corresponding to the target nuclear steam supply system function is determined to indicate availability; otherwise, the first function status information corresponding to the target nuclear steam supply system function is determined to indicate unavailability.

In view of this, according to the method in the embodiment, the accuracy of determining the first function status information corresponding to the target nuclear steam supply system function can be improved.

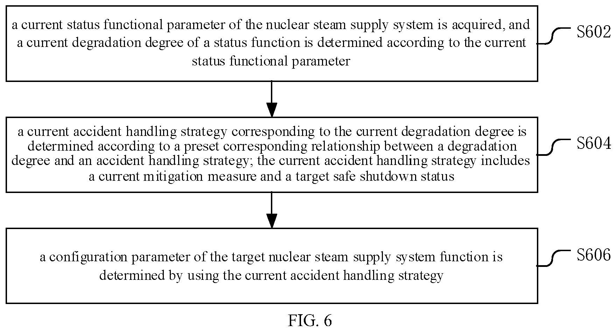

FIG. 6 is a flow chart showing another nuclear steam supply system function detection method according to an embodiment. As shown in FIG. 6, based on the above embodiment, this embodiment further illustrates and optimizes the technical solution. Specifically, in the embodiment, the method may further include the following steps.

Step 602: a current status functional parameter of the nuclear steam supply system is acquired, and a current degradation degree of a status function is determined according to the current status functional parameter.

Specifically, the current status functional parameter of the nuclear steam supply system refers to a parameter corresponding to a current status function of the nuclear power plant, such as subcriticality, primary loop water loading capacity, waste heat extraction, steam generator water loading capacity, steam generator integrity, containment integrity, reactivity, nuclear power, primary loop pressure, primary loop average temperature, primary loop boron concentration, and other corresponding parameters. The current status functional parameter of the nuclear steam supply system can be acquired by using a nuclear steam supply system functional parameter measuring instrument preset in the nuclear power plant. For example, the nuclear power of the reactor can be measured by a power range detector, an intermediate range detector, and a source range detector in a nuclear instrument system. The core neutron flux, the core temperature, and the pressure vessel water level can be measured by a self-powered neutron detector and a thermocouple detector in a core measurement system respectively. The primary loop pressure can be measured by a reactor coolant system pressure measuring instrument arranged in a pressurizer and a safety injection system pressure measuring instrument arranged in a primary loop heat pipe section. The primary loop temperature can be measured by a narrow range temperature measuring instrument of the reactor coolant system arranged in the primary loop cold pipe section and a wide range temperature measuring instrument of the safety injection system arranged in the primary loop heat pipe section.

Specifically, a plurality of degree comparison values are set for each status function respectively, and the current degradation degree corresponding to the current status functional parameter is determined according to comparison results between the current status functional parameter and the corresponding plurality of degree comparison values. For example, if the pressure vessel water level measuring system detects that the pressure vessel water level is lower than a top portion of the primary loop heat pipe section, it is determined that the primary loop water loading capacity is slightly degraded. If the pressure vessel water level is detected to be lower than a bottom portion of the primary loop heat pipe section, it is determined that the primary loop water loading capacity is seriously degraded.

Step 604: a current accident handling strategy corresponding to the current degradation degree is determined according to a preset corresponding relationship between a degradation degree and an accident handling strategy. The current accident handling strategy includes a current mitigation measure and a target safe shutdown status.

Specifically, a one-to-one corresponding relationship is established in advance between a degradation degree of a status function and an accident handling strategy. Accordingly, after the current degradation degree of the status function is determined, the current accident handling strategy corresponding to the current degradation degree is determined according to the preset corresponding relationship between the degradation degree and the accident handling strategy. Furthermore, each accident handling strategy includes a mitigation measure and a safe shutdown status corresponding to the degradation degree of the status function. Accordingly, the current mitigation measure and the target safe shutdown status can be determined according to the current accident handling strategy.

Step 606: a configuration parameter of the target nuclear steam supply system function is determined by using the current accident handling strategy.

It should be appreciated that after an accident occurs, there may exist a certain difference between current status functional parameters of the nuclear steam supply system and target status functional parameters corresponding to the target safe shutdown status, and some current status functional parameters may exceed the normal control range of the corresponding parameter type. In this case, a corrective action needs to be taken to change a unit status of the nuclear steam supply system, so that one or more associated unit status parameters are restored to be within the target range, and finally to reach the corresponding target safe shutdown status. Specifically, after the current accident handling strategy is determined, the current mitigation measure and the target safe shutdown status according to the current accident handling strategy are determined, and then a parameter type of the nuclear steam supply system function currently needing to be configured is selected according to the current mitigation measure, and the target status functional parameters of the nuclear steam supply system function are determined according to the target safe shutdown status.

In the method provided in the embodiment, a corresponding relationship between the degradation degree and the accident handling strategy is established, and the configuration parameter of the target nuclear steam supply system function is determined by using the current accident handling strategy. Accordingly, the target nuclear steam supply system is regulated according to the configuration parameter, the unit status can be accurately regulated, and the safe and stable operation of the target nuclear steam supply system can be guaranteed.

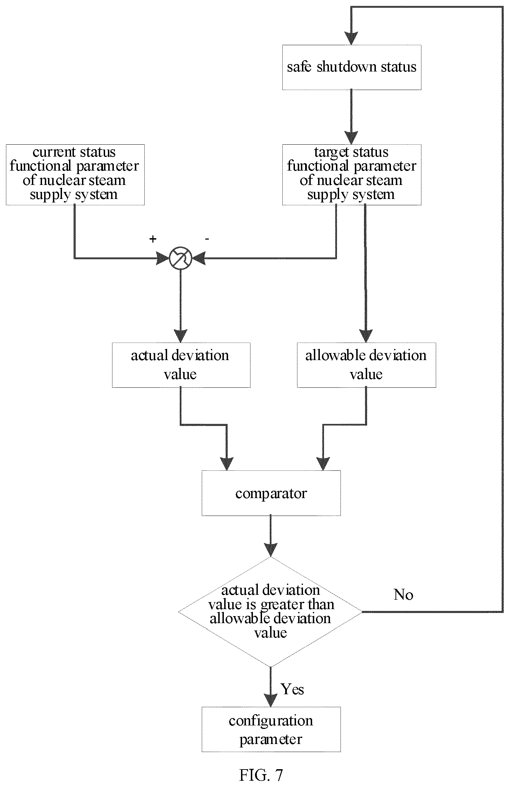

As shown in FIG. 7, a flow chart of determining a configuration parameter of a target nuclear steam supply system function is provided. In the embodiment, the step that the configuration parameter of the target nuclear steam supply system function is determined by using a mitigation measure in the current accident handling strategy may include:
a target status functional parameter corresponding to the current status functional parameter of the nuclear steam supply system is determined;
an actual deviation value between the current status functional parameter and the target status functional parameter is calculated; the target status functional parameter has the same type as the current status functional parameter;
the configuration parameter of the target nuclear steam supply system function is determined according to the actual deviation value and a preset allowable deviation range.

Specifically, in the embodiment, after the current status functional parameter of the nuclear steam supply system is acquired, the target status functional parameter corresponding to a parameter type of the current function status parameter is determined according to the parameter type of the current status functional parameter; the actual deviation value between the current status functional parameter and the target status functional parameter is determined by calculating a difference value between the current status functional parameter and the target status functional parameter; it is determined by a comparator that whether the actual deviation value is within the preset allowable deviation range; if the actual deviation value is within the preset allowable deviation range, it indicates that there is no need to regulate the configuration parameter of the target nuclear steam supply system function at present, and the current status functional parameter of the nuclear steam supply system continues to be monitored; if the actual deviation value is not within the preset allowable deviation range, it indicates that the current status functional parameter dissatisfies the corresponding target safe shutdown status, and the configuration parameter of the target nuclear steam supply system function is determined accordingly. The configuration parameter may include the parameter type needing to be regulated and the target status functional parameter that needs to be regulated.

It should be noted that when an accident occurs in the nuclear power plant, no matter whether a stabilization or withdrawal accident handling strategy is adopted, the status parameter of the nuclear steam supply system function has a definite value or range. When a stable accident handling strategy is adopted, if the unit operation and safety have clear requirements on the status parameter of the nuclear steam supply system function, the target status functional parameter of the nuclear steam supply system function is a preset value required by the unit operation and safety. If the unit operation and safety have no clear requirements on the status parameter of the nuclear steam supply system function, the target status functional parameter of the nuclear steam supply system function is the current status functional parameter of the unit. When the withdrawal accident handling strategy is adopted, the functional parameter of the target status functional parameter of the nuclear steam supply system function is a unit status functional safety value.

The unit status functional safety value refers to a preset value for which the degradation degree of the unit status parameter and the available status of the nuclear steam supply system function should be taken into account. For example, when the unit status parameter requires immediate withdrawal when not degraded or slightly degraded, a target temperature value for the unit withdrawal can be set to 135°C. When the unit status parameter requires immediate withdrawal when being seriously degraded and immediate withdrawal is required, the target temperature value for the unit withdrawal can be set to 180°C. Meanwhile, after the above-mentioned target temperature value for the unit withdrawal is reached, if the residual heat removal system is available, the target temperature value for the unit withdrawal can be set to 60°C and the withdrawal is continued. In addition, the unit target status functional parameter can also be manually set by operating personnel for a situation where the immediate withdrawal is not required when an accident occurs, and the withdrawal is required only after the accident grace period is expired, or for some handling strategies that require unit uplink to mitigate the accident.

In view of the above, in the embodiment, the configuration parameter of the target nuclear steam supply system function is further determined, which can not only accurately and conveniently determine the configuration parameter, but also facilitate operating personnel to regulate the unit status of the nuclear steam supply system according to the configuration parameter, thereby guaranteeing the safe and stable operation of the target nuclear steam supply system.

In an embodiment, the method may further include:
a regulation priority of the configuration parameter of the target nuclear steam supply system function is determined according to the degradation degree.

Specifically, in actual operations, by setting regulation priorities of different configuration parameters, the configuration parameters are regulated according to the regulation priorities. In an embodiment, regulation priorities corresponding to different parameter types are preset. When a plurality of configuration parameters need to be regulated, a regulation priority of each configuration parameter is first determined according to a parameter type of each configuration parameter, and then the configuration parameters are regulated in a descending order of the regulation priorities.

In the embodiment, the regulation priority of each configuration parameter of the target nuclear steam supply system function is further determined according to the degradation degree of the current status functional parameter. More specifically, the higher the degradation degree, the more serious the abnormal status represented by the current status functional parameter, and therefore the higher the regulation priority corresponding to the degradation degree, that is, the status parameter corresponding to the current status functional parameter needs to be regulated in time. Accordingly, in actual operations, the corresponding regulation priority is set according to the degradation degree of the parameter type corresponding to the target nuclear steam supply system function, and the degradation degree is positively correlated with the regulation priority.

In an embodiment, the step that the regulation priority of the configuration parameter of the target nuclear steam supply system function is determined according to the degradation degree may include:
when there exists a target status function with a current degradation degree representing a serious degradation, the regulation priority of the configuration parameter corresponding to the target status function is set to the highest priority;
when there is no status function with a current degradation degree representing a serious degradation, a regulation priority of a configuration parameter corresponding to each status function is determined according to a type of each status function.

Specifically, in the embodiment, after the degradation degree of the current status functional parameter is determined, it is first determined whether there exists a degradation degree representing a serious degradation in the determined degradation degrees; if so, the status parameter with the current degradation degree representing the serious degradation is determined as the target status functional parameter, and the regulation priority of the configuration parameter corresponding to the target status functional parameter is set to the highest priority; if not, the regulation priority of the configuration parameter corresponding to each status function can be directly determined according to the type of each status function.

That is to say, when there is no seriously degraded status function, the corresponding regulation priority is set for each configuration parameter according to the preset priority which is set according to the parameter type. When there exists a seriously degraded target status function, regardless of the preset priority set according to the parameter type, the regulation priority of the target function status with the serious degradation degree is directly set to the highest priority. For example, when the regulation priority is set according to the parameter type, the regulation priority of the status parameter for residual heat removal is higher than the regulation priority of the status parameter for restoring the primary loop water loading capacity. When the primary loop water loading capacity is slightly degraded, the regulation priority of the status parameter for the residual heat removal is higher than the regulation priority of the status parameter for restoring the primary loop water loading capacity. When the primary loop water loading capacity is seriously degraded, the regulation priority of the status parameter for restoring the primary loop water loading capacity is higher than the regulation priority of the status parameter for the residual heat removal.

In the embodiment, the regulation priority of the configuration parameter of the target nuclear steam supply system function is determined according to the degradation degree, accordingly the regulation order of the configuration parameters can be determined according to the accident situation, thereby implementing convenient and orderly restoration of the target nuclear steam supply system function.

On the basis of the above embodiment, an embodiment below further illustrates and optimizes the technical solution. Specifically, in the embodiment, the method may further include:
the configuration parameter, the function status and a third operating status corresponding to the target nuclear steam supply system function are displayed through a visual image.

In the embodiment, a monitoring display device is adopted to display the configuration parameter, the function status and the third operating status corresponding to the target nuclear steam supply system function through the visual image. The third operating status of the target nuclear steam supply system function refers to operation and shutdown information of the target nuclear steam supply system function, which may include continuous quantity information such as a flow rate and a pressure, etc., and switch quantity information such as turn-on, turn-off, starting and stopping, etc.

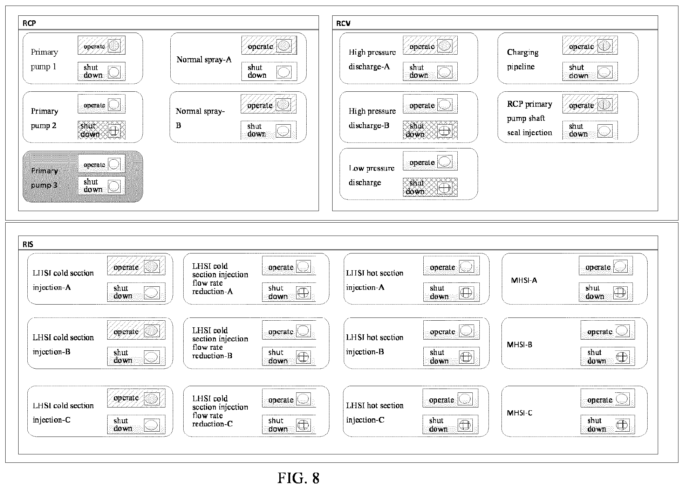

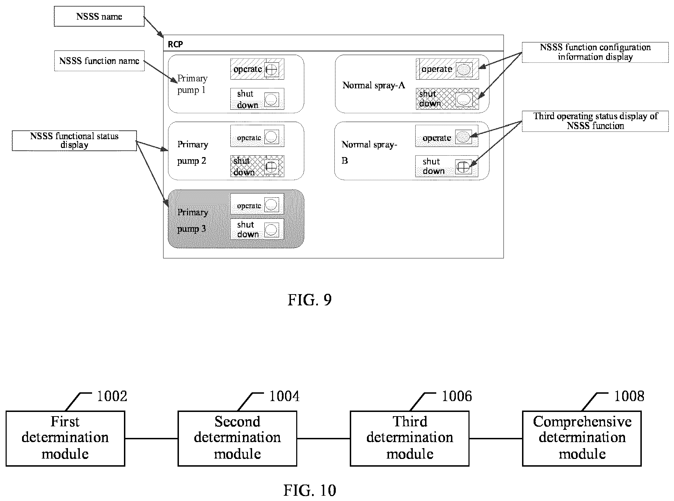

FIG. 8 is a schematic diagram of a nuclear steam supply system function monitoring and display screen, and FIG. 9 is a partial enlarged view of the nuclear steam supply system function monitoring and display screen shown in FIG. 8. As shown in FIGS. 8 and 9, in a specific embodiment, the background color of the nuclear steam supply system function module represents the availability information of the nuclear steam supply system function, that is, the function status. When the module background color is light, it represents that the function status of the nuclear steam supply system is available; and when the module background color is dark, it represents that the function status of the nuclear steam supply system is unavailable. A third operating status display module of the nuclear steam supply system function includes an operation module and a shutdown module, and two indicator lights are adopted to indicate the operation and shutdown information. For example, when the green light is on and the red light is off, it means that the nuclear steam supply system function is operating. When the red light is on and the green light is off, it means that the nuclear steam supply system function is shut down. When the red light and the green light are simultaneously on or off, it indicates a fault status. The user needs to combine other information to determine the specific operating status of the nuclear steam supply system function. The nuclear steam supply system configuration information module is outside the third operating status display module of the nuclear steam supply system function, and the red and green lights may also be adopted to represent the configuration information of the nuclear steam supply system function. When there is an operating configuration requirement of the nuclear steam supply system function and the nuclear steam supply system function is not in an operating status, the nuclear steam supply system function configuration information module is in a green flicker status; when there is an operating configuration requirement of the nuclear steam supply system function and the nuclear steam supply system function is in an operating status, the nuclear steam supply system function configuration module is in a green bright status. Similarly, when there is a shutdown configuration requirement of the nuclear steam supply system function and the nuclear steam supply system function is in the operating status, the nuclear steam supply system function configuration information module is in a red flicker status; when there is an operating configuration requirement of the nuclear steam supply system function and the nuclear steam supply system function is in a shutdown status, the nuclear steam supply system function configuration information module is in a red bright status. When the indicator lights of the nuclear steam supply system function configuration information module are all off, it means that there is no configuration requirement of the nuclear steam supply system function at this time, and there is no need to change the configuration information of the nuclear steam supply system function. When the indicator lights of the nuclear steam supply system function configuration information module are all on, it means that the nuclear steam supply system function is in a fault status. This moment, the user needs to combine the accident handling strategy and other information to determine the actual configuration information of the nuclear steam supply system function.

In order to enable those skilled in the art to better understand the technical solution of the present application, the technical solution in the embodiments of the present application is described in detail below in combination with actual application scenarios. In the embodiment of the present invention, another nuclear steam supply system function detection method is provided, and the specific steps may include the following steps.

First operation information of a signal acquisition device is determined according to whether a signal value collected by the signal acquisition device exceeds a normal range and whether there exists a wiring or disconnection fault in the signal acquisition device.

Second operation information of an execution device is determined according to whether there exits fault information of the execution device.

First function status information corresponding to the target nuclear steam supply system function is determined according to the first operation information and the second operation information.

A second operating status of a support system corresponding to the target nuclear steam supply system function is acquired.

If the number of the support systems is equal to one, when it is determined that the support system is faulty according to the second operating status, the second function status information of the target nuclear steam supply system function is determined to indicate unavailability; otherwise, the second function status information of the target nuclear steam supply system function is determined to indicate availability.

If there are a plurality of support systems, and the plurality of support systems are redundantly connected to the nuclear steam supply system, when it is determined that the plurality of support systems are faulty according to a second operating status of each support system, the second function status information of the target nuclear steam supply system function is determined to indicate unavailability; otherwise, the second function status information of the target nuclear steam supply system function is determined to indicate availability.

If the support system is a cold source system, the support system is determined to be faulty according to the following modes by acquiring a cooling pump bearing temperature, a cooling pump motor winding temperature, a cooling pump inlet pressure, a cooling pump outlet pressure, a cooling medium temperature, and a cooling medium flow rate corresponding to the target nuclear steam supply system function:
if the cooling pump bearing temperature is greater than a first temperature threshold, the support system is determined to be faulty;
if the cooling pump motor winding temperature is greater than a second temperature threshold, the support system is determined to be faulty;
if the cooling pump inlet pressure is less than a first pressure threshold, the support system is determined to be faulty;
if the cooling pump outlet pressure is less than a second pressure threshold, the support system is determined to be faulty;
if the cooling medium temperature is greater than a third temperature threshold, the support system is determined to be faulty;
if the cooling medium flow rate is less than a first flow rate threshold, the support system is determined to be faulty.

According to disaster detection information of each system device, a target system device where the disaster occurs is determined, and a first availability status of the target system device is determined.

First available information is set for an associated system device in the same sub-district as the target system device; sub-districts are obtained by dividing the fire protection district according to a preset mode.

The sub-districts are arranged and combined, and a safety probability corresponding to each arrangement and combination associated with the target system device is calculated according to an association relationship of system devices in each sub-district.

Second available information of an associated system device in each sub-district is determined according to the safety probability and a corresponding relationship between a system device and a sub-district.

A second availability status of an associated system device in the same fire protection district as the target system device is determined according to the first availability information and the second availability information.

A third function status information corresponding to the target nuclear steam supply system function is determined according to the first availability status of the target system device and the second availability status of the associated system device.

A function status of the target nuclear steam supply system function is determined according to the first function status information, the second function status information, and the third function status information.

A current status functional parameter of the nuclear steam supply system is acquired, and a current degradation degree of a status function is determined according to the current status functional parameters.

A current accident handling strategy corresponding to the current degradation degree is determined according to a preset corresponding relationship between a degradation degree and an accident handling strategy; the current accident handling strategy includes a current mitigation measure and a target safe shutdown status.

A target status functional parameter corresponding to the current status functional parameter of the nuclear steam supply system is determined.

An actual deviation value between the current status functional parameter and the target status functional parameter is calculated; the target status functional parameter is the same type as the current status functional parameter.

A configuration parameter of the target nuclear steam supply system function is determined according to the actual deviation value and a preset allowable deviation range.

A regulation priority of the configuration parameter of the target nuclear steam supply system function is determined according to the degradation degree; if there exists a target status function with a current degradation degree presenting a serious degradation, the regulation priority of the configuration parameter corresponding to the target status function is set to the highest priority; if there is no status function with a current degradation degree representing a serious degradation, a regulation priority of a configuration parameter corresponding to each status function is determined according to a type of each status function.

In the nuclear steam supply system function detection method provided in the embodiment, the first function status information and the second function status information of the target nuclear steam supply system function are determined according to the operating status of the system device and the operating status of the support system respectively. After the target system device where the disaster occurs is determined, the associated system device affected by the disaster of the target system device is determined through the probabilistic safety analysis, the third function status information corresponding to the target nuclear steam supply system function is determined according to the target system device and the associated system device, the function status of the target nuclear steam supply system function is determined according to the first function status information, the second function status information, and the third function status information. In the method, the process of manually performing the detection operation is replaced with the probabilistic safety analysis, to determine whether other system devices associated with the target system device where the disaster occurs are available. Accordingly, the method can improve the convenience of detecting the available status of the nuclear steam supply system function, while reducing the consumption of human resources. In addition, since manual operation is avoided, the diagnosis errors caused by human factors during the manual detection process can be avoided, thereby improving the detection accuracy. The configuration parameter of the target nuclear steam supply system function is further determined, which can not only accurately and conveniently determine the configuration parameters but also facilitate the operating personnel to regulate the unit status of the nuclear steam supply system according to the configuration parameter, so that the safe and stable operation of the target nuclear steam supply system function can be guaranteed. By determining the regulation priority of the configuration parameter of the target nuclear steam supply system function according to the degradation degree, the regulation order of the configuration parameter can be determined according to the accident situation, so that the convenient and orderly restoration of the target nuclear steam supply system function can be implemented.

It should be appreciated that, although the steps in the flow charts involved in the above embodiments are displayed in sequence as indicated by the arrows, these steps are not definitely executed in the order indicated by the arrows. Unless otherwise specified herein, there is no strict order limitation on the execution of these steps, and these steps may be executed in other orders. Moreover, at least a part of the steps in the flow charts involved in the above embodiments may include multiple steps or multiple stages. These steps or stages are not definitely executed at the same moment, but can be executed at different moments. The execution order of these steps or stages is not definitely sequential, but can be executed in turns or alternately with other steps or at least part of the steps or stages in other steps.

Based on the same inventive concept, in an embodiment of the present invention, a nuclear steam supply system function detection apparatus for implementing the above-mentioned nuclear steam supply system function detection method is provided. The solution to the problem provided by the apparatus is similar to the solution described in the above method. Therefore, for the specific limitations in one or more embodiments of the nuclear steam supply system function detection apparatus provided below, reference can be made to the limitations on the above-mentioned nuclear steam supply system function detection method, which will not be repeated here.

In an embodiment, as shown in FIG. 10, a nuclear steam supply system function detection apparatus is provided, which may include: a first determination module 1002, a second determination module 1004, a third determination module 1006, and a comprehensive determination module 1008.

The first determination module 1002 is configured to determine first function status information corresponding to a target nuclear steam supply system function according to a first operating status of a system device in the nuclear steam supply system.

The second determination module 1004 is configured to acquire a second operating status of a support system in the nuclear steam supply system corresponding to the target nuclear steam supply system function, and determine second function status information of the target nuclear steam supply system function.

The third determination module 1006 is configured to determine a target system device where a disaster occurs, determine an associated system device affected by the disaster of the target system device through a probabilistic safety analysis, and determine third function status information corresponding to the target nuclear steam supply system function according to the target system device and the associated system device.

The comprehensive determination module 1008 is configured to determine a function status of the target nuclear steam supply system function according to the first function status information, the second function status information, and the third function status information.

The nuclear steam supply system function detection apparatus provided in the embodiment of the present invention has the same advantages as the above-mentioned nuclear steam supply system function detection method.

In an embodiment, the third determination module may include:
a first determination submodule, configured to determine a target system device where the disaster occurs according to disaster detection information of each system device, and determine a first availability status of the target system device;
a second determination submodule, configured to determine a second availability status of an associated system device in the same fire protection district as the target system device through probabilistic safety analysis;
a third determination submodule, configured to determine the third function status information corresponding to the target nuclear steam supply system function according to the first availability status of the target system device and the second availability status of the associated system device.

In an embodiment, the second determination submodule may include:
a first setting unit, configured to set first availability information for an associated system device in the same sub-district as the target system device, in which sub-districts are areas obtained by partitioning a fire protection district according to a preset mode;
a calculation unit, configured to arrange and combine the sub-districts, and calculate a safety probability corresponding to each arrangement and combination associated with the target system device according to an association relationship of system devices in each sub-district;
a second setting unit, configured to determine second availability information of an associated system device in each sub-district according to the safety probability and a corresponding relationship between a system device and a sub-district;
a first determination unit, configured to determine a second availability status of the associated system device in the same fire protection district as the target system device according to the first availability information and the second availability information.

In an embodiment, the second determination module may include:
an acquisition submodule, configured to acquire the second operating status of the support system corresponding to the target nuclear steam supply system function;
a fourth determination submodule, configured to determine the second function status information of the target nuclear steam supply system function according to the number, connection relationships and the second operating statuses of support systems.

In an embodiment, if the support system is a cold source system, the acquisition submodule may include:
an acquisition unit, configured to acquire a cooling pump bearing temperature, a cooling pump motor winding temperature, a cooling pump inlet pressure, a cooling pump outlet pressure, a cooling medium temperature, and a cooling medium flow rate corresponding to the target nuclear steam supply system function.

In an embodiment, the fourth determination submodule may include:
a first status determination unit, configured to, when the number of the support systems is equal to one and when the support system is determined to be faulty according to the second operating status, determine that the second function status information of the target nuclear steam supply system function indicates unavailability, otherwise, determine that the second function status information of the target nuclear steam supply system function indicates availability.

In an embodiment, the fourth determination submodule may include:
a second status determination unit configured to: when there exists a plurality of support systems and the plurality of support systems are redundantly connected to the nuclear steam supply system, and when the plurality of support systems are determined to be faulty according to the second operating status of each support system, determine that the second function status information of the target nuclear steam supply system function indicates unavailability; otherwise, determine that the second function status information of the target nuclear steam supply system function indicates availability.

In an embodiment, the fourth determination submodule may include:
a first fault determination subunit, configured to determine the support system to be faulty when the cooling pump bearing temperature is greater than a first temperature threshold.

In an embodiment, the fourth determination submodule may include:
a second fault determination subunit configured to determine the support system to be faulty when the cooling pump motor winding temperature is greater than a second temperature threshold.

In an embodiment, the fourth determination submodule may include:
a third fault determination subunit, configured to determine the support system to be faulty when the cooling pump inlet pressure is less than a first pressure threshold.

In an embodiment, the fourth determination submodule may include:
a fourth fault determination subunit, configured to determine the support system to be faulty when the cooling pump outlet pressure is less than a second pressure threshold.

In an embodiment, the fourth determination submodule may include:
a fifth fault determination subunit, configured to determine the support system to be faulty when the cooling medium temperature is greater than a third temperature threshold.

In an embodiment, the fourth determination submodule may include:
a sixth fault determination subunit, configured to determine the support system to be faulty when the cooling medium flow rate is less than a first flow rate threshold.

In an embodiment, the system device may include a signal acquisition device and an execution device. The first determination module may include:
a first information determination submodule, configured to determine first operation information of the signal acquisition device according to whether signal input information of the signal acquisition device exceeds a normal range and whether there exists a wiring or disconnection fault in the signal acquisition device;
a second information determination submodule, configured to determine second operation information of the execution device according to whether there exists fault information of the execution device;
a status information determination submodule, configured to determine first function status information corresponding to the target nuclear steam supply system function according to the first operation information and the second operation information.

In an embodiment, a nuclear steam supply system function detection apparatus may further include:
a degradation degree determination module, configured to acquire a current status functional parameter of the nuclear steam supply system, and determine a current degradation degree of a status function according to the current status functional parameter;
a strategy determination module, configured to determine a current accident handling strategy corresponding to the current degradation degree according to a preset corresponding relationship between a degradation degree and an accident handling strategy; in which the current accident handling strategy includes a current mitigation measure and a target safe shutdown status;
a configuration parameter determination module, configured to determine a configuration parameter of the target nuclear steam supply system function by using the current accident handling strategy.

In an embodiment, a nuclear steam supply system function detection apparatus may further include:
a priority determination module, configured to determine a regulation priority of the configuration parameter of the target nuclear steam supply system function according to the degradation degree.

The priority determination module may include:
a first priority determination submodule, configured to set a regulation priority of a configuration parameter corresponding to a target status function to the highest priority when there exists the target status function with a current degradation degree representing a serious degradation.

In an embodiment, the priority determination module may include:
a second priority determination submodule, configured to determine a regulation priority of a configuration parameter corresponding to each status function according to a type of each status function when there is no status function with a current degradation degree representing a serious degradation.

In an embodiment, the configuration parameter determination module may include:
a first parameter determination submodule, configured to determine a target status functional parameter corresponding to the current status functional parameter of the nuclear steam supply system;
a deviation value determination submodule, configured to calculate an actual deviation value between the current status functional parameter and the target status functional parameter, in which the target status functional parameter is the same type as the current status functional parameter;
a second parameter determination submodule, configured to determine a configuration parameter of the target nuclear steam supply system function according to the actual deviation value and a preset allowable deviation range.

In an embodiment, a nuclear steam supply system function detection apparatus may further include:
a display module, configured to display the configuration parameter, the function status and a third operating status corresponding to the target nuclear steam supply system function through a visual image.

Modules in the above-mentioned nuclear steam supply system function detection apparatus can be fully or partially implemented by software, hardware and combination thereof. The above modules may be embedded in or independent of a processor in a computer device in the form of hardware, or may be stored in a memory in a computer device in the form of software, so that the processor can invoke and execute operations corresponding to the above modules.

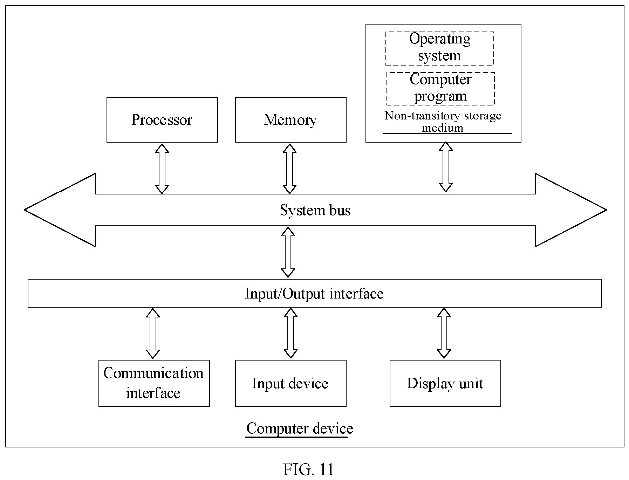

In an embodiment, a computer device is provided. The computer device may be a terminal, and an internal structure diagram thereof may be as shown in FIG. 11. The computer device may include a processor, a memory, a communication interface, a display screen and an input device connected to each other via a system bus. The processor of the computer device is configured to provide computing and control capabilities. The memory of the computer device may include a non-transitory storage medium and an internal memory. The non-transitory storage medium stores an operating system and a computer program. The internal memory provides an environment for the operation of the operating system and the computer program in the non-transitory storage medium. The communication interface of the computer device is configured to communicate with an external terminal in a wired or wireless mode, and the wireless manner can be achieved through WIFI, mobile cellular network, near field communication (NFC) or other technologies. When the computer program is executed by a processor, a nuclear steam supply system function detection method is implemented. The display screen of the computer device can be a liquid crystal display screen or an electronic ink display screen, and the input device of the computer device can be a touch layer covering the display screen, or a key, trackball or touchpad provided on the computer device housing, or an external keyboard, touchpad or mouse, etc.

Those skilled in the art should understand that the structure shown in FIG. 11 is merely a block diagram of a partial structure related to the solution of the present application, and does not constitute a limitation on the computer device to which the solution of the present application is applied. A specific computer device may include more or fewer components than shown in the figure, or combine certain components, or have a different arrangement of components.

In an embodiment, a computer device is provided, including a processor and a memory for storing a computer program. The processor, when executing the computer program, may implement the following steps of:
determining first function status information corresponding to a target nuclear steam supply system function according to a first operating status of a system device in the nuclear steam supply system;
acquiring a second operating status of a support system in the nuclear steam supply system corresponding to the target nuclear steam supply system function, and determining second function status information of the target nuclear steam supply system function;
determining a target system device where a disaster occurs, determining an associated system device affected by the disaster of the target system device through a probabilistic safety analysis, and determining third function status information corresponding to the target nuclear steam supply system function according to the target system device and the associated system device; and
determining a function status of the target nuclear steam supply system function according to the first function status information, the second function status information, and the third function status information.

The computer device provided in the embodiment of the present invention has the same advantages as the above-mentioned nuclear steam supply system function detection method.

In an embodiment, a computer-readable storage medium is provided, on which a computer program is stored. The computer program, when executed by a processor, may cause the processor to implement the following steps of:
determining first function status information corresponding to a target nuclear steam supply system function according to a first operating status of a system device in the nuclear steam supply system;
acquiring a second operating status of a support system in the nuclear steam supply system corresponding to the target nuclear steam supply system function, and determining second function status information of the target nuclear steam supply system function;
determining a target system device where a disaster occurs, determining an associated system device affected by the disaster of the target system device through a probabilistic safety analysis, and determining third function status information corresponding to the target nuclear steam supply system function according to the target system device and the associated system device; and
determining a function status of the target nuclear steam supply system function according to the first function status information, the second function status information, and the third function status information.

The computer-readable storage medium provided in the embodiment of the present invention has the same advantages as the above-mentioned nuclear steam supply system function detection method.

In an embodiment, a computer program product is provided, which includes a computer program. The computer program, when executed by a processor, may cause the processor to implement the following steps of:
determining first function status information corresponding to a target nuclear steam supply system function according to a first operating status of a system device in the nuclear steam supply system;
acquiring a second operating status of a support system in the nuclear steam supply system corresponding to the target nuclear steam supply system function, and determining second function status information of the target nuclear steam supply system function;
determining a target system device where a disaster occurs, determining an associated system device affected by the disaster of the target system device through a probabilistic safety analysis, and determining third function status information corresponding to the target nuclear steam supply system function according to the target system device and the associated system device; and
determining a function status of the target nuclear steam supply system function according to the first function status information, the second function status information, and the third function status information.

The computer program product provided in the embodiment of the present invention has the same advantages as the above-mentioned nuclear steam supply system function detection method.

It should be noted that the user information (including but not limited to user device information, user personal information, etc.) and data (including but not limited to data used for analysis, stored data, displayed data, etc.) involved in the present application are all information and data authorized by the user or fully authorized by all parties.

A person of ordinary skill in the art should understand that all or part of the processes in the above-mentioned method embodiments can be implemented by instructing related hardware through a computer program. The computer program can be stored in a non-transitory computer-readable storage medium. When the computer program is executed, the processes of the above-mentioned method embodiments are included. Any reference to a memory, a database, or other medium used in the embodiments provided in the present application may include at least one of a non-transitory memory and a transitory memory. The non-transitory memory may include a read-only memory (ROM), a magnetic tape, a floppy disk, a flash memory, an optical storage, a high-density embedded non-volatile memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM) or an external cache memory, etc. By way of illustration and not limitation, the RAM may be in various forms, such as a static random access memory (SRAM) or a dynamic random access memory (DRAM). The database involved in each embodiment provided in the present invention may include at least one of a relational database and a non-relational database. The non-relational database may include, but is not limited to, a distributed database based on blockchain. The processor involved in each embodiment provided in the present invention may be a general-purpose processor, a central processing unit, a graphics processor, a digital signal processor, a programmable logic unit, a data processing logic unit based on quantum computing, etc., which is not limited thereto.

The technical features in the above embodiments can be arbitrarily combined. In order to make the description concise, all possible combinations of the technical features in the above embodiments are not described. However, as long as there is no contradiction in the combinations of these technical features, these combinations should be regarded as falling within the scope of the present invention.

The above-described embodiments merely express several implementation modes of the present application, and the description thereof is relatively specific and detailed, but it should not be construed as limiting the scope of the present application. It should be pointed out that, those skilled in the art can make several modifications and improvements without departing from the concept of the present application, which all fall within the scope of protection of the present application. Therefore, the protection scope of the present application should be subject to the appended claims.

## Claims

1. A nuclear steam supply system function detection method, **characterized by** comprising:
determining first function status information corresponding to a target nuclear steam supply system function according to a first operating status of a system device in the nuclear steam supply system;
acquiring a second operating status of a support system in the nuclear steam supply system corresponding to the target nuclear steam supply system function, and determining second function status information of the target nuclear steam supply system function;
determining a target system device where a disaster occurs, determining an associated system device affected by the disaster of the target system device through a probabilistic safety analysis, and determining third function status information corresponding to the target nuclear steam supply system function according to the target system device and the associated system device; and
determining a function status of the target nuclear steam supply system function according to the first function status information, the second function status information, and the third function status information.

2. The method according to claim 1, wherein the determining the target system device where the disaster occurs, determining the associated system device affected by the disaster of the target system device through the probabilistic safety analysis, and determining the third function status information corresponding to the target nuclear steam supply system function according to the target system device and the associated system device comprises:
determining the target system device where the disaster occurs according to disaster detection information of each system device, and determining a first availability status of the target system device;
determining a second availability status of the associated system device located in the same fire protection district as the target system device through the probabilistic safety analysis; and
determining the third function status information corresponding to the target nuclear steam supply system function according to the first availability status of the target system device and the second availability status of the associated system device.

3. The method according to claim 2, wherein the determining the second availability status of the associated system device located in the same fire protection district as the target system device through the probabilistic safety analysis comprises:
setting the first availability information for the associated system device in the same sub-district as the target system device, wherein sub-districts are areas obtained by partitioning the fire protection district according to a preset mode;
arranging and combining the sub-districts, and calculating a safety probability corresponding to each arrangement and combination associated with the target system device according to an association relationship of system devices in each sub-district;
determining the second availability information of the associated system device in each sub-district according to the safety probability and a corresponding relationship between a system device and the sub-district; and
determining the second availability status of the associated system device in the same fire protection district as the target system device according to the first availability information and the second availability information.

4. The method according to claim 1, wherein the acquiring the second operating status of the support system in the nuclear steam supply system corresponding to the target nuclear steam supply system function, and determining the second function status information of the target nuclear steam supply system function comprises:
acquiring the second operating status of the support system corresponding to the target nuclear steam supply system function; and
determining the second function status information of the target nuclear steam supply system function according to the number, connection relationships and second operating statuses of support systems.

5. The method according to claim 4, wherein when the support system is a cold source system, the acquiring the second operating status of the support system corresponding to the target nuclear steam supply system function comprises:
acquiring a cooling pump bearing temperature, a cooling pump motor winding temperature, a cooling pump inlet pressure, a cooling pump outlet pressure, a cooling medium temperature, and a cooling medium flow rate corresponding to the target nuclear steam supply system function.

6. The method according to claim 5, wherein the determining the second function status information of the target nuclear steam supply system function according to the number, connection relationships and second operating statuses of support systems comprises:
when the number of the support systems is equal to one, and when the support system is determined to be faulty according to the second operating status, determining that the second function status information of the target nuclear steam supply system function indicates unavailability; otherwise, determining that the second function status information of the target nuclear steam supply system function indicates availability;
when there exists a plurality of support systems, and the plurality of support systems are redundantly connected to the nuclear steam supply system, and when the plurality of support systems are determined to be faulty according to the second operating status of each support system, determining that the second function status information of the target nuclear steam supply system function indicates the unavailability; otherwise, determining that the second function status information of the target nuclear steam supply system function indicates the availability.

7. The method according to claim 6, further comprising one of the following:
when the cooling pump bearing temperature is greater than a first temperature threshold, determining the support system to be faulty;
when the cooling pump motor winding temperature is greater than a second temperature threshold, determining the support system to be faulty;
when the cooling pump inlet pressure is less than a first pressure threshold, determining the support system to be faulty;
when the cooling pump outlet pressure is less than a second pressure threshold, determining the support system to be faulty;
when the cooling medium temperature is greater than a third temperature threshold, determining the support system to be faulty; or
when the cooling medium flow rate is less than a first flow rate threshold, determining the support system to be faulty.

8. The method according to claim 1, wherein the system device comprises a signal acquisition device and an execution device, the determining the first function status information corresponding to the target nuclear steam supply system function according to the first operating status of the system device in the nuclear steam supply system comprises:
determining first operation information of the signal acquisition device according to whether a signal value collected by the signal acquisition device exceeds a normal range and whether there exists a wiring or disconnection fault in the signal acquisition device;
determining second operation information of the execution device according to whether there exists fault information of the execution device; and
determining the first function status information corresponding to the target nuclear steam supply system function according to the first operation information and the second operation information.

9. The method according to any one of claims 1 to 8, further comprising:
acquiring a current status functional parameter of the nuclear steam supply system, and determining a current degradation degree of a status function according to the current status functional parameter;
determining a current accident handling strategy corresponding to the current degradation degree according to a preset corresponding relationship between a degradation degree and an accident handling strategy, wherein the current accident handling strategy comprises a current mitigation measure and a target safe shutdown status; and
determining a configuration parameter of the target nuclear steam supply system function by using the current accident handling strategy.

10. The method according to claim 9, further comprising:
determining a regulation priority of the configuration parameter of the target nuclear steam supply system function according to the degradation degree.

11. The method according to claim 10, wherein the determining the regulation priority of the configuration parameter of the target nuclear steam supply system function according to the degradation degree comprises:
when there exists a target status function with a current degradation degree representing a serious degradation, setting the regulation priority of the configuration parameter corresponding to the target status function to the highest priority;
when there is no status function with a current degradation degree representing a serious degradation, determining a regulation priority of a configuration parameter corresponding to each status function according to a type of each status function.

12. The method according to claim 9, wherein the determining the configuration parameter of the target nuclear steam supply system function by using the current accident handling strategy comprises:
determining a target status functional parameter corresponding to the current status functional parameter of the nuclear steam supply system;
calculated an actual deviation value between the current status functional parameter and the target status functional parameter, wherein the target status functional parameter has the same type as the current status functional parameter; and
determining the configuration parameter of the target nuclear steam supply system function according to the actual deviation value and a preset allowable deviation range.

13. The method according to claim 12, further comprising:
displaying the configuration parameter, the function status and a third operating status corresponding to the target nuclear steam supply system function through a visual image.

14. A nuclear steam supply system function detection apparatus, **characterized by** comprising:
a first determination module, configured to determine first function status information corresponding to a target nuclear steam supply system function according to a first operating status of a system device in the nuclear steam supply system;
a second determination module, configured to acquire a second operating status of a support system in the nuclear steam supply system corresponding to the target nuclear steam supply system function, and determine second function status information of the target nuclear steam supply system function;
a third determination module, configured to determine a target system device where a disaster occurs, determine an associated system device affected by the disaster of the target system device through a probabilistic safety analysis, and determine third function status information corresponding to the target nuclear steam supply system function according to the target system device and the associated system device;
a comprehensive determination module, configured to determine a function status of the target nuclear steam supply system function according to the first function status information, the second function status information, and the third function status information.

15. A computer device, comprising a processor and a memory storing a computer program, wherein the processor, when executing the computer program, implements the method of any one of claims 1 to 13.

16. A computer-readable storage medium, on which a computer program is stored, wherein the computer program, when executed by a processor, causes the processor to implement the method of any one of claims 1 to 13.

17. A computer program product, comprising a computer program, wherein the computer program, when executed by a processor, causes the processor to implement the method of any one of claims 1 to 13.
